# EUROPEAN PATENT APPLICATION

(11) **EP 1 346 627 A1**
(43) Date of publication of application: **24.09.2003**
(21) Application number: 03006114.7
(22) Date of filing: 18.03.2003
(51) Int. Cl.: A01F 15/14

(54) **Device for optimizing the peripheral tying of cylindrical bales of agricultural products such as straw, forage or the like, made with a roundbaler**

(30) Priority: 20.03.2002 IT BO20020135
(71) Applicant: Gallignani S.p.A., 48026 Russi (Ravenna) (IT)
(72) Inventor: Ravaglia, Paolo, 48020 Glorie Di Bagnacavallo (Ravenna) (IT)
(74) Representative: Modiano, Guido, Dr.-Ing.

(57) **Abstract**

A device for optimizing the peripheral tying of cylindrical bales of agricultural products such as straw, forage or the like, performed by means of a roundbaler having a chamber for forming the bale (2) which is formed by belt sectors that are closed in a loop and advance continuously, with, at the base, a set of belts (4) for supporting the bale being formed, said belts being closed in a loop and wound around rollers (5, 6, 7), and oscillating means (8) for distributing at least one twine (9) for wrapping the bale (2), the device comprising disk means (11), associated with said set of belts (4), for fixing the end of said twine (9) along the cylindrical surface (10) of the bale (2) in the final step of tying.

## Description

The present invention relates to a device for optimizing the peripheral tying of cylindrical bales of agricultural products such as straw, forage or the like, made with a roundbaler.

Roundbalers for forming cylindrical bales of agricultural products such as straw, forage or the like are known which comprise a chassis with supporting wheels, which is provided with a body with a rear door that can be lifted in order to allow the bale to exit, and has at its base an inlet equipped with a device for gathering products to be baled: inside the body there is a bale formation chamber, which has a fixed or gradually increasing volume and is delimited by movable sectors of belts that are closed in a loop and advance continuously.

Prior to expulsion, the bale is suitably tied peripherally by means of oscillating elements for distributing at least one twine, which is wound by rotating said bale about its own axis.

At the end of the tying step, the bale, unloaded onto the ground, rolls by inertia until it stops after covering a certain distance; often, in this situation the end of the twine or twines used for tying catches in protrusions of the ground or unwinds by gravity from the cylindrical surface of the bale.

This phenomenon is particularly undesirable, especially because the unwound end of the tying twine or twines can catch between the mechanical elements of the machines that subsequently handle the bale, forcing the operator to fix the twines to each respective bale before transporting it.

The aim of the present invention is to obviate the cited drawbacks, by providing a device for optimizing the peripheral tying of bales which, when mounted on a conventional roundbaler, allows to limit the unwinding of the end of the twine from the bale in the final step of tying.

Within this aim, an object of the present invention is to provide a device for optimizing tying that relieves the operator of the need to go to each bale unloaded from the roundbaler in order to wind the end of the unwound twine back onto the bale and fix it thereto.

Another object of the present invention is to devise a structure that is simple, relatively easy to provide in practice, safe in use, effective in operation and relatively low in cost.

This aim and these and other objects are achieved by the present device for optimizing the peripheral tying of cylindrical bales of agricultural products such as straw, forage or the like, performed by means of a roundbaler that has a bale formation chamber which is formed by sectors of belts that are closed in a loop and advance continuously with, at the base, a set of belts for supporting the bale being formed, said belts being closed in a loop and wound around rollers, and oscillating means for distributing at least one bale wrapping twine, the device being characterized in that it comprises disk means, associated with said set of belts, for fixing the end of said twine along the cylindrical surface of the bale in the final step of tying.

Further characteristics and advantages of the present invention will become better apparent from the detailed description of a preferred but not exclusive embodiment of a device for optimizing the peripheral tying of cylindrical bales of agricultural products such as straw, forage or the like, performed by means of a roundbaler, according to the invention, illustrated only by way of non-limitative example in the accompanying drawings, wherein:

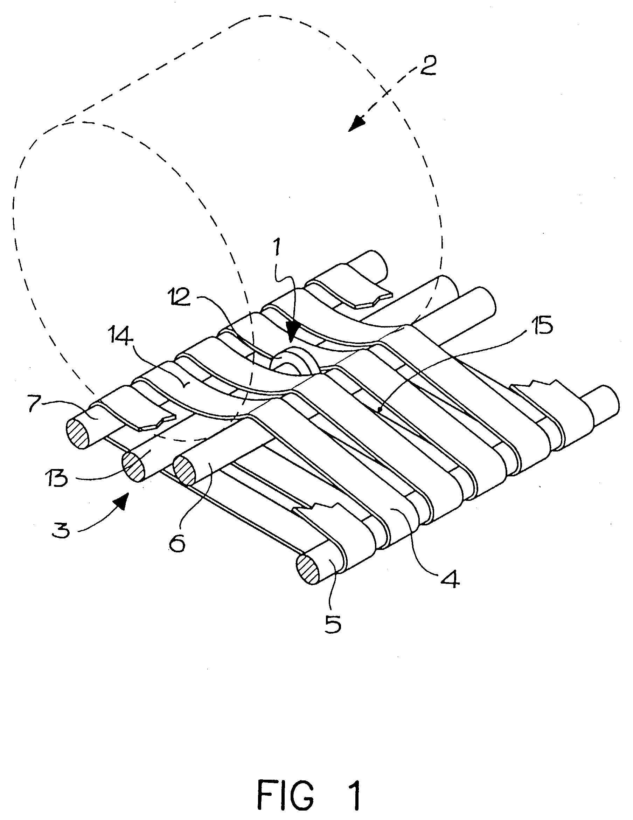

Figure 1 is a perspective view of a detail of the roundbaler, with the device according to the invention;

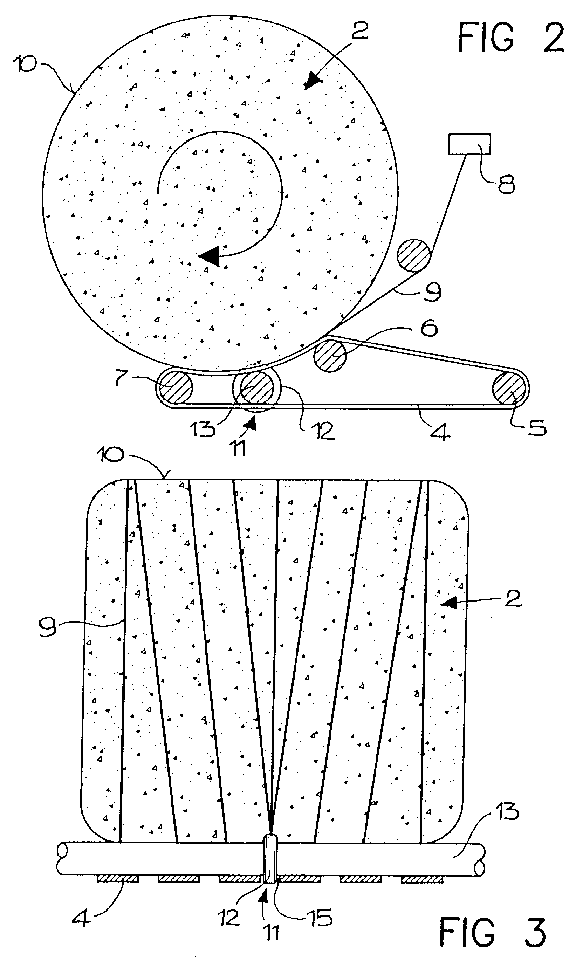

Figure 2 is a partially sectional side elevation view of a detail of said device with the bale in the step for tying in the roundbaler;
Figure 3 is a partially sectional front view of a detail of the device with the bale in the step for tying in the roundbaler.

With reference to the figures, the reference numeral 1 generally designates a device for optimizing the peripheral tying of cylindrical bales 2 of agricultural products such as straw, forage and the like, made with a roundbaler 3, according to the invention.

The device is mounted on a roundbaler of the type that comprises a chamber for forming the bale 2 that is constituted by sectors, which can be movable, formed by belts that are closed in a loop and advance continuously. The chamber is formed, at the base, by a set of parallel belts 4 for supporting the bale 2 being formed, which are closed in a loop and are wound around a front roller 5, an intermediate roller 6 and a rear roller 7 with parallel axes, whose centerlines are arranged like the vertices of a substantially flattened triangle.

The roundbaler 3 is further provided, at the front, with oscillating means 8 for distributing at least one twine 9 for wrapping the bale 2; the means 8 for distributing each twine 9 are adapted to wrap substantially in a helical fashion the tying twine 9 onto the cylindrical surface 10 of the bale. The bale can be wrapped with one or more twines 9.

According to the invention, the device comprises disk means 11 for fixing the end of the twine 9 along the cylindrical surface 10 of the bale 2 in the final step of tying. The disk means 11 are associated with the set of parallel belts 4 and comprise at least one disk 12, whose axis is parallel to the axis of the rollers 5, 6 and 7 of the belts 4, which is adapted to penetrate partially the thickness of the bale 2 along the cylindrical surface 10, in order to obtain a slot for embedding the end of the twine 9 in said thickness.

The disk 12 is fixed to a freely rotating shaft 13 or is associated with rotary actuation means, is supported in the chassis of the roundbaler 3 and has an axis that is parallel to the axis of the rollers 5, 6 and 7. The disk 12 is interposed between two adjacent belts 4, for example in a substantially central position or where tying is chosen to end, protruding partially from the respective active upper portions 14 of the belts 4 for supporting the bale inside the formation chamber; in this manner, the peripheral portion of the disk partially penetrates the thickness of the bale 2 through the cylindrical surface 10.

The oscillating distribution means 8 are adapted to convey the twine 9, which is wound by the rotation of the bale 2 about its own axis: once the winding of the twine 9 has been completed, the twine distribution means 8 are stopped, and the twine enters between the belts 4 and is arranged above the disk 12, while the bale 2 continues to rotate for one or more full turns. The tying twine 9 is therefore fed around the bale 2 through the slot 15 formed between two adjacent belts 4 and at the disk 12.

Operation of the device provides an optimized tying method according to the invention, comprising the following: after the end of the step for forming the bale 2 inside the chamber, the oscillating distribution means 8 dispense one or more tying twines 9, winding them substantially along one or more helical paths on its cylindrical surface 10.

At the end of the tying step, the distribution means 8 stop the lateral oscillation and convey the twine 9 between two adjacent belts 4 and at the disk 12: the twine engages on the rotating disk 12, which by penetrating the thickness of the bale 2 through the cylindrical surface 10, forms a slot, embedding the end of the twine 9 in the thickness of the bale, where it remains after cutting.

The device for optimizing tying according to the invention ensures sufficient fixing of the end of the twine 9 for winding around the cylindrical surface of the bale 2, thus avoiding manual interventions of the operator before subsequent handling.

Moreover, the amount of twine 9 that has to be dispensed for tying each bale is reduced significantly due to the effective fixing of the end to the cylindrical surface 10.

It has thus been shown that the invention achieves the intended aim and objects.

The invention thus conceived is susceptible of numerous modifications and variations, all of which are within the scope of the appended claims.

All the details may further be replaced with other technically equivalent ones.

In practice, the materials used, as well as the shapes and dimensions, may be any according to the requirements without thereby abandoning the scope of the protection of the appended claims.

The disclosures in Italian Patent Application No. BO2002A000135 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A device for optimizing the peripheral tying of cylindrical bales of agricultural products such as straw, forage or the like, performed by means of a roundbaler (3) having a chamber for forming the bale (2) which is formed by belt sectors that are closed in a loop and advance continuously, with, at the base, a set of belts (4) for supporting the bale being formed, said belts being closed in a loop and wound around rollers (5, 6, 7), and oscillating means (8) for distributing at least one twine (9) for wrapping the bale (2), the device being **characterized in that** it comprises disk means (11), associated with said set of belts (4), for fixing the end of said twine (9) along the cylindrical surface (10) of the bale (2) in the final step of tying.

2. The device according to claim 1, **characterized in that** said fixing means (11) comprise at least one disk (12), whose axis is parallel to the axis of said rollers (5, 6, 7) and is adapted to penetrate the thickness of the bale (2) along said cylindrical surface (10), obtaining a slot for embedding said end of said twine (9) in said thickness.

3. The device according to claims 1 and 2, **characterized in that** said disk (12) is fixed to a freely rotating shaft (13) whose axis is parallel to the axis of said rollers (5, 6, 7).

4. The device according to claims 1 and 2, **characterized in that** said disk (12) is fixed to a shaft (13), which is associated with rotary actuation means and whose axis is parallel to the axis of said rollers (5, 6, 7).

5. The device according to one or more of the preceding claims, **characterized in that** said disk (12) is interposed between two of said adjacent belts (4).

6. The device according to one or more of the preceding claims, **characterized in that** it comprises a slot (15) formed between two of said adjacent belts (4), and once the oscillation of said oscillating means (8) has ended and the bale is tied (2), said twine (9) is fed around said bale (2) through said slot (15) and at said disk (12), said oscillating distribution means (8) being adapted to convey said twine (9), entrained by the rotation of the bale (2), onto said disk (12) in the final step of tying.
